(19) Europäisches Patentamt
European Patent Office
Office européen des brevets

(11) Veröffentlichungsnummer: **0 284 992 B1**

(12) **EUROPÄISCHE PATENTSCHRIFT**

(45) Veröffentlichungstag der Patentschrift: 03.07.91

(51) Int. Cl.⁵: **B65G 13/11**

(21) Anmeldenummer: 88104675.9

(22) Anmeldetag: 23.03.88

(54) **Rasterleiste.**

(30) Priorität: 27.03.87 DE 8704612 U

(43) Veröffentlichungstag der Anmeldung:
05.10.88 Patentblatt 88/40

(45) Bekanntmachung des Hinweises auf die
Patenterteilung:
03.07.91 Patentblatt 91/27

(84) Benannte Vertragsstaaten:
DE ES FR GB IT NL

(56) Entgegenhaltungen:
DE-A- 3 403 877
GB-A- 2 015 459
US-A- 3 420 348
US-A- 3 586 142

(73) Patentinhaber: Schulze-Berge, Otto, Dipl.-Ing.
Pferdekamp 6
W-4700 Hamm 4(DE)

(72) Erfinder: Schulze-Berge, Otto, Dipl.-Ing.
Pferdekamp 6
W-4700 Hamm 4(DE)

(74) Vertreter: Dipl.-Ing. Schwabe, Dr. Dr. Sandmair, Dr. Marx
Stuntzstrasse 16
W-8000 München 80(DE)

## Beschreibung

Die Erfindung betrifft eine Rasterleiste für die Halterung jeweils der, in Transportrichtung gesehen, einlaufseitigen bzw. auslaufseitigen Enden einer oder mehrerer U-förmiger Schienen von Röllchenleisten auf einem Träger.

Röllchenleisten, wie sie aus der DE-B-2 844 229, aber auch aus dem DE-U 8 117 576 hervorgehen, weisen eine U-förmige Schiene mit beispielsweise schitzförmigen Aufnahmen in den Seitenwänden der Schiene für ein leiterförmiges Befestigungselement auf, das nach oben offene Aussparungen für die Achsenden der Rollen enthält. Eine ähnliche Röllchenleiste geht aus der GB-A-2 015 459 hervor, wobei die Achsenden der Rollen direkt in Aussparungen einer U-förmigen Schiene gelagert sind.

Bei der Montage solcher Rollenbahnen muß eine Vielzahl solcher Röllchenleisten, deren Breite im allgemeinen nur einige Zentimeter beträgt und deren Länge durch die U-förmige Schiene vorgegeben wird, parallel nebeneinander angeordnet und montiert werden, damit auch große, sperrige Güter gefördert werden können.

Zu diesem Zweck ist es aus der GB-A-2 015 459 bekannt, in den Seitenwänden der U-förmigen Schienen Aussparungen vorzunehmen, so daß die U-förmigen Schienen auf die vorstehenden Ränder von Tragelementen aufgeklemmt werden können. Hierzu sind jedoch relativ aufwendige Formvorgänge an den U-förmigen Schienen einerseits und den Tragelementen andererseits erforderlich.

Als eine Alternative hierzu können zur Befestigung der einzelnen Röllchenleisten auf einem Träger, der beispielsweise durch U-Profile gebildet wird, Rasterleisten eingesetzt werden, die jedoch mit verschiedenen Nachteilen verbunden sind. Dazu gehört insbesondere die aufwendige Montage, ein relativ grobes Raster, das Verstellungen nur in relativ großen Schritten ermöglicht, und schließlich die Verwendung von Spezialelementen, beispielsweise Schienen mit ausgestanzten Nasen, die zusätzliche Arbeitsgänge erfordern.

Der Erfindung liegt deshalb die Aufgabe zugrunde, eine Rasterleiste für die Halterung jeweils der, in Transportrichtung gesehen, einlaufseitigen bzw. auslaufseitigen Enden einer oder mehrerer U-förmiger Schienen von Röllchenleisten auf einem Träger zu schaffen, die einfach montiert werden kann und auch eine relativ feine Einstellung ermöglicht.

Diese Aufgabe wird erfindungsgemäß durch die im kennzeichnenden Teil des Anspruchs 1 angegebenen Merkmale gelöst.

Zweckmäßige Ausführungsformen werden durch die Merkmale der Unteransprüche definiert.

Die mit der Erfindung erzielten Vorteile beruhen zunächst darauf, daß diese Rasterleiste sehr einfach montiert werden kann, indem sie auf einen Profilschenkel aufgedrückt oder aufgeschlagen und dadurch festgeklemmt wird; es sind keine ausgestanzten Nasen an den Schienen mehr erforderlich, da die verwendete, kraftschlüssige Verbindung den gestellten Anforderungen standhält. Die konischen Zapfen, die im Einlauf lang und im Auslauf kurz sind, halten die U-förmigen Schienen der Röllchenleiste in den beiden, zueinander senkrechten Hauptrichtungen, nämlich in der Horizontalen und in der Vertikalen, so daß kein zweiter oberer Profilschenkel mehr erforderlich ist, wie es bei den bisher üblichen Rasterleisten der Fall war. Und schließlich können die U-förmigen Schienen nun in einem 5,5 mm Raster verstellt werden, was mit den bisherigen Befestigungstechniken nicht möglich war, die mit einem 15 mm und in Ausnahmefällen einem 7,5 mm Raster arbeiten. Sowohl bei der Her-stellung als auch bei der Montage einer solchen Rasterleiste können Kosten gespart werden, so daß insgesamt die Kosten einer mit diesen Rasterleisten aufgebauten Rollenbahn sinken.

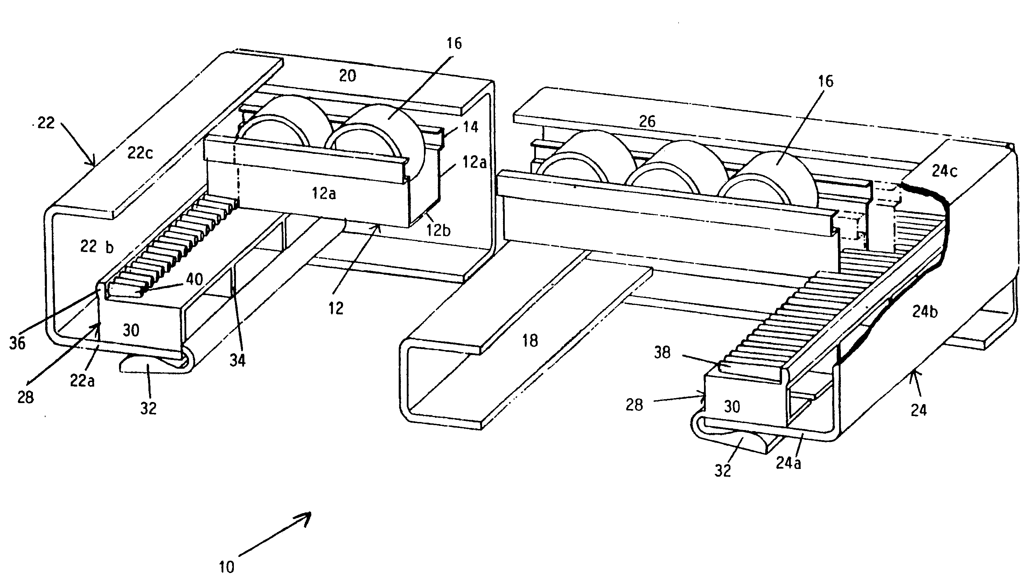

Die Erfindung wird im folgenden anhand von Ausführungsbeispielen unter Bezugnahme auf die beiliegende, schematische Zeichnung näher erläutert, deren einzige Figur eine perspektivische Ansicht einer Rollenbahn mit einer einzigen Röllchenleiste zeigt.

Die allgemein durch das Bezugszeichen 10 angedeutete Rollenbahn enthält mindestens eine Röllchenleiste 12 mit einer U-förmigen Schiene, die einen Boden 12b und zwei Schenkel 12a aufweist. Die oberen Enden der Schenkel 12a sind mit Rinnen 14 für die Aufnahme eines leiterförmigen Befestigungselementes (nicht dargestellt) versehen, das die Achsen der Röllchen 16 aufnimmt. Details des Aufbaus einer solchen Röllchenleiste gehen aus der DE-PS 2 844 229 hervor.

Als Alternative hierzu kann auch eine Röllchenleiste eingesetzt werden, wie sie aus dem DE-U 81 17 576 bekannt ist.

Zur Halterung dieser Röllchenleiste 12 dienen senkrecht zur Röllchenleiste 12 verlaufende U-Profile 22, 18 und 24, wobei sich das U-Profil 18 etwa in der Mitte der Röllchenleiste 12 befindet und als zentrale Abstützung dient, während die Enden der Röllchenleiste 12 durch die U-Profile 22 und 24 gehalten werden.

Bei der dargestellten Ausführungsform haben die U-Profile 22, 24 einen unteren, längeren, horizontalen Schenkel 22a, 24a, einen vertikalen Boden 22b, 24b und einen kürzeren, oberen, horizontalen Schenkel 22c, 24c. Wie noch erläutert werden soll, hat jedoch der obere Schenkel 22c, 24c keine Funktion, so daß auch im Prinzip ein Winkelprofil mit Schenkeln 22a, 24a bzw. 22b, 24b ausreicht.

Außerdem sind noch am dargestellten Rand der Rollenbahn 10 U-Profile 20, 26 vorgesehen, die zur zeitlichen Abstützung dienen und nicht näher erläutert werden sollen.

Während im mittleren Bereich die Röllchenleiste 12 auf dem U-Profil 18 aufliegt (bei längeren Rollenbahnen können mehrere U-Profile 18 vorgesehen werden), werden die Enden der Röllchenleiste 12 durch aus Kunststoff hergestellte Rasterleisten 28 auf den unteren, längeren, vertikalen Schenkeln 22a, 24a der U-Profile 22, 24 befestigt.

Jede Rasterleiste 28 besteht aus einem kastenförmigen Hauptkörper 30 mit einer Länge von etwa 10 cm, einer Breite von etwa 3 cm und einer Höhe von etwa 1,5 cm; der kastenförmige Hauptkörper 30 ist hohl und mit Querwänden 34 versehen, die zur Abstützung seiner beiden Hauptflächen dienen.

An einer Unterkante ist der Hauptkörper 30 einstückig mit einer umgebogenen Leiste 32 versehen, die zu ihrem Ende hin etwas verdickt ist, wie man in der Figur erkennt; diese Leiste 32 kann etwas verformt, nämlich von dem Hauptkörper 30 weggebogen werden, so daß der untere, längere Schenkel 22a, 24a der U-Profile 22, 24 in den Spalt zwischen dem Hauptkörper 30 und der Leiste 32 eingeschoben werden kann. Durch die Rückstellkraft der Leiste 32 wird der Schenkel 22a, 24a zwischen Hauptkörper 30 und Leiste 32 eingeklemmt und dort kraftschlüssig gehalten.

Zur Montage der Rasterleisten 28 müssen sie also nur auf die aus der Figur ersichtliche Weise auf die Schenkel 22a, 24a gedrückt, gegebenenfalls aufgeschlagen und dadurch festgeklemmt werden. Eine weitere Befestigung, bspw. mittels der Schenkel 22c, 24c der U-Profile 22, 24, ist nicht erforderlich.

Auf der von der unteren Hauptfläche, die zur Befestigung der Rasterleiste 28 dient, abgewandten, oberen Hauptfläche des Hauptkörpers 30 ist ein kurzer, leistenförmiger Vorsprung 36 ausgebildet; wie man in der Zeichnung erkennt, befindet sich dieser Vorsprung 36 an einer Ecke des Hauptkörpers 30, die der Ecke mit der Liste 32 diametral gegenüberliegt. Dieser Vorsprung 36 ist mit einer auf eine Linie liegenden Reihe von konischen Zapfen 38, 40 versehen; jede Reihe von konischen Zapfen 38, 40 erstreckt sich parallel zur oberen Hauptfläche des Hauptkörpers 30 der Rasterleiste 28 in Richtung zur Röllchenleiste 12.

Auf der in der Darstellung in der Figur linken Seite, nämlich der Einlaufseite der Rollenbahn 10, sind die konischen Zapfen 40 kürzer als die konischen Zapfen 38 am rechten Ende der Rollenbahn, dem Auslaufende, um die Montage zu erleichter, wie noch erläutert werden soll.

Die Stirnfläche der U-förmigen Schiene der Röllchenleiste 12 wird durch jeweils eine Rasterleiste 28 gehalten, indem die Enden der Schenkel 12a zwischen zwei benachbarte, konische Zapfen 38, 40 nd der Boden 12b zwischen mehrere, nebeneinanderliegende konische Zapfen 38, 40 und die obere Hauptfläche des Hauptkörpers 30 der Rasterleiste 28 eingeschoben werden. Auf diese Weise werden die U-förmigen Schienen der Röllchenleisten 12 sowohl in horizontaler als auch in vertikaler Richtung durch die Rasterleisten 28 mit den konischen Zapfen 38, 40 gehalten.

Die konischen Zapfen 38, 40 können sehr dünn ausgebildet und deshalb eng nebeneinander angeordnet werden, so daß die Verstellung der Schiene in einem Raster von 5,5 mm möglich ist. Weitere Modifikationen der U-Profile 22, 24 oder der U-förmigen Schienen der Röllchenleisten 12 sind nicht erforderlich, insbesondere nicht mehr die bisher üblichen, ausgestanzten Nasen, die zur Verbindung zwischen den Rasterleisten und den Röllchenleisten benötigt wurden.

Die Figur zeigt die Rollenbahn 10 in der Einlege- und Montageposition für die Röllchenleisten 12; die Röllchenleiste 12 wird gemäß der Darstellung in der Figur nach rechts verschoben und erreicht eine Lage, in der die Enden der U-förmigen Schiene mit gestrichelten Linien angedeutet sind; dann wird das linke Ende der U-förmigen Schiene an den konischen Zapfen 40 vorbei nach unten abgesenkt, bis der Boden 12b der Schiene auf der Hauptfläche des Hauptkörpers 30 aufliegt; anschließend wird die U-förmige Schiene gemäß der Darstellung in der Figur wieder nach links in die Lage geschoben, die in der Figur mit durchgezogenen Linien angedeutet ist, wodurch die Enden der U-förmigen Schiene, wie erläutert, durch die konischen Zapfen 38, 40 und die obere Hauptfläche des Hauptkörpers 30 der Rasterleiste 28 gehalten werden.

Während die langen, konischen Zapfen 38 eine Länge haben, die etwa der Breite des Hauptkörpers 30 der rechten Rasterleiste 28 entspricht, beträgt die Länge der kurzen, konischen Zapfen 40 etwa die Hälfte der Breite der oberen Hauptfläche des Hauptkörpers 30, wie man in der Zeichnung erkannt.

Die Breite der Rasterleiste 28 und die Länge der konischen Zapfen 38, 40 müssen so ausgelegt werden, daß die oben erläuterte Montage möglich ist.

## Ansprüche

1. Rasterleiste für die Halterung jeweils der, in Transportrichtung gesehen, einlaufseitigen bzw. auslaufseitigen Enden einer oder mehrer U-förmiger Schienen von Röllchenleisten auf einem Träger,
   **gekennzeichnet durch**
   a) einen kastenförmigen Hauptkörper (30) auf dem auf einer oberen Hauptfläche die einlaufseitigen bzw. auslaufseitigen Enden der U-förmigen Schienen (12) aufliegen, mit
b) einem auf einen Profilschenkel (22a, 22b) des Trägers (22, 24) aufklemmbaren Befestigungsteil (32), und durch
c) eine Reihe von konischen Zapfen (38, 40), die nebeneinander auf der oberen Hauptfläche des kastenförmigen Hauptkörpers (30) angeordnet sind, wobei deren Symmetrieachsen parallel zur oberen Hauptfläche des Hauptkörpers (30) und parallel zur Längsrichtung der U-förmigen Schienen (12) angeordnet sind,
d) wobei der Abstand zwischen zwei benachbarten Zapfen (38, 40) der Dicke eines Schenkels (12a) der U-förmigen Schienen und der Abstand zwischen den konischen Zapfen (38, 40) und der oberen Hauptfläche des Hauptkörpers (30) der Dicke des Bodens (12b) der U-förmigen Schienen (12) angepaßt sind.

2. Rasterleiste nach Anspruch 1, dadurch gekennzeichnet, daß der kastenförmige Hauptkörper (30) einstückig mit einer in Steckrichtung abgebogenen Befestigungsleiste (32) mit einer Verdickung zum kraftschlüssigen Aufklemmen auf den Profilschenkel (22a, 24a) versehen ist.

3. Rasterleiste nach einem der Ansprüche 1 oder 2, dadurch gekennzeichnet, daß sie aus einem Kunststoff hergestellt ist.

4. Rasterleiste nach einem der Ansprüche 1 bis 3, dadurch gekennzeichnet, daß die konischen Zapfen (40) der Rasterleiste (28), welche die auslaufseitigen Enden der U-förmigen Schienen(12) trägt, kürzer als die konischen Zapfen (38) der Rasterleiste (28) für deren einlaufseitige Enden sind.

5. Rasterleiste nach einem der Ansprüche 1 bis 4, dadurch gekennzeichnet, daß der kastenförmige Hauptkörper (30) an einem Rand seiner oberen Hauptfläche einen leistenförmigen Vorsprung (36) aufweist, an dem die konischen Zapfen (38, 40) ausgebildet sind.

## Claims

1. Grid strip for holding respectively the entrance and exit, seen in the transport direction, ends of one or more U-shaped rails of roller strips on a beam,
characterized by
a) a box-shaped main body (30) on which on an upper main surface the entrance and exit ends of the U-shaped rails (12) lie, comprising
b) a securing member (32) clampable onto a profile leg (22a, 22b) of the beam (22, 24), and by
c) a row of conical pins (38, 20) which are arranged adjacent each other on the upper main surface of the box-shaped main body (30), their axes of symmetry being arranged parallel to the upper main surface of the main body (30) and parallel to the longitudinal direction of the U-shaped rails (12),
d) the distance between two adjacent pins (38, 40) being adapted to the thickness of a lag (12a) of the U-shaped rails and the distance between the conical pins (38, 40) and the upper main surface of the main body (30) being adapted to the thickness of the bottom (12b) of the U-shaped rails (12).

2. Grid strip according to claim 1, characterized in that the box-shaped main body (30) is provided integrally with a securing strip (32) which is bent in the insert direction and has a thickening for force-locking clamping onto the profile leg (22a, 24a).

3. Grid strip according to claim 1 or 2, characterized in that it is made from plastic.

4. Grid strip according to any one of claims 1 to 3, characterized in that the conical pins (40) of the grid strip (28) which carries the exit ends of the U-shaped rails (12) are shorter than the conical pins (38) of the grid strip (28) for the entrance ends thereof.

5. Grid strip according to any one of claims 1 to 4, characterized in that the box-shaped main body (30) comprises at one edge of its upper main surface a strip-like projection (36) on which the conical pins (38, 40) are formed.

## Revendications

1. Barrette crantée pour la fixation, dans le sens du transport, respectivement des extrémités d'entrée ou de sortie d'un ou de plusieurs rails en forme de U de guides de galets sur un support,
caractérisé par
a) un corps principal en forme de caisson (30) sur lequel reposent, sur une surface principale supérieure, les extrémités d'entrée ou de sortie des rails en forme de U (12), avec
b) un élément de fixation (32) pouvant être fixé sur une branche profilée (22a,22b) du support (22,24), et par

c) une pluralité de tiges coniques (38, 40), juxtaposées sur la surface principale supérieure du corps principal (30) en forme de caisson, dont les axes de symétrie sont parallèles à la surface principale supérieure du corps principal (30) et parallèles à la direction longitudinale des rails en forme de U (12),

d) l'écartement entre deux tiges adjacentes (38, 40) étant adapté à l'épaisseur d'une branche (12a) des rails en forme de U et l'écartement entre les tiges coniques (38,40) et la surface principale supérieure du corps principal (30) étant adapté à l'épaisseur du fond (12b) des rails en forme de U (12).

2. Barrette crantée selon la revendication 1, caractérisée en ce que le corps principal (30) en forme de caisson, faisant corps avec une baguette de fixation (32) cintrée dans la direction d'enfichage, est pourvu d'un renflement en vue du blocage par verrouillage sur les branches profilées (22a,24a).

3. Barrette crantée selon l'une des revendications 1 ou 2, caractérisée en ce qu'elle est réalisée en matière plastique.

4. Barrette crantée selon l'une quelconque des revendications 1 à 3, caractérisée en ce que les tiges coniques (40) de la barrette crantée (28) qui porte les extrémités de sortie des rails en forme de U (12), sont plus courtes que les tiges coniques (38) de la barrette crantée (28) pour les extrémités d'entrée des rails.

5. Barrette crantée selon l'une quelconque des revendications 1 à 4, caractérisée en ce que le corps principal (30) en forme de caisson présente sur un bord de sa surface principale supérieure une saillie (36) en forme de nervure, sur laquelle sont réalisées les tiges coniques (38, 40).

EP 0 284 992 B1